# EUROPEAN PATENT SPECIFICATION

(11) **EP 4 249 161 B1**
(45) Date of publication and mention of the grant of the patent: **27.08.2025**
(21) Application number: 21894574.9
(22) Date of filing: 12.11.2021
(51) Int. Cl.: B23K 26/14, B23K 26/21, B23K 26/08, B23K 26/30

(54) **SIDE NOZZLE, LASER WELDING MACHINE, AND LASER WELDING METHOD**
SEITENDÜSE, LASERSCHWEISSMASCHINE UND LASERSCHWEISSVERFAHREN
BUSE LATÉRALE, MACHINE DE SOUDAGE AU LASER ET PROCÉDÉ DE SOUDAGE LASER

(30) Priority: 19.11.2020 JP 2020192495
(43) Date of publication of application: 27.09.2023
(73) Proprietor: Amada Co., Ltd., Isehara-shi, Kanagawa 259-1196 (JP)
(72) Inventor: KATO, Toshihide, Isehara-shi, Kanagawa 259-1196 (JP); SAITO, Junichi, Isehara-shi, Kanagawa 259-1196 (JP); KANZAKI, Daisuke, Isehara-shi, Kanagawa 259-1196 (JP); AMANO, Tatsuya, Isehara-shi, Kanagawa 259-1196 (JP)
(74) Representative: Grünecker Patent- und Rechtsanwälte PartG mbB
(86) International application number: PCT/JP2021/041754
(87) International publication number: WO 2022/107700

(56) References cited:
- EP-B1- 3 475 022
- CN-U- 203 956 335
- CN-Y- 2 905 302
- DE-C1- 10 129 430
- JP-A- 2004 130 360
- JP-A- 2014 237 148
- JP-A- 2015 058 448
- JP-A- 2016 052 679
- JP-A- 2020 049 505
- JP-A- S59 218 289
- US-A1- 2016 354 866

## Description

### Technical Field

The present disclosure relates to a side nozzle, a laser welding machine, and a laser welding method.

### Background Art

When a laser welding machine irradiates a weld position on a sheet metal with a laser beam to weld the weld position, the laser welding machine blows, to the weld position, shielding gas that inhibits molten metal from reacting with oxygen. Various nozzles are selectively mounted and used on the welding head of the laser welding machine in accordance with the type of a product to be welded or the position of the weld position in the product (see Patent Literature 1).

For example, at the time of welding a weld position on a ridge portion on the outside of a box-shaped product, a side nozzle is used. In the side nozzle, a gas blow nozzle for blowing shielding gas is provided on the side of a head attachment that is attached to the welding head. When the laser welding machine welds the weld position using the side nozzle, the gas blow nozzle blows shielding gas toward the weld position from the rear in the moving direction of the welding head. The use of the side nozzle has the advantage of excellent shielding of the welding position.

On the other hand, at the time of welding a weld position on a valley portion on the inside of the box-shaped product, a narrow nozzle is used. When the laser welding machine welds the weld position using the narrow nozzle, the narrow nozzle blows shielding gas toward the weld position from directly above the weld position. The narrow nozzle has the advantage of being able to move close to the welding position on the valley portion and blow the shielding gas thereto. DE 101 29 430 C1 A discloses a laser welding assembly that has a laser system with a beam guide and beam shaping unit. A laser beam is focused on a weld joint, whereby the effective zone of the laser beam is created on the workpieces to be welded. A working gas nozzle supplies a working gas, in order in particular to reduce shielding of the focused laser beam by a laser induced plasma at the effective zone. A protective gas is supplied to the active zone by means of a protective gas nozzle in order to shield the solidifying melt of the material from the ambient atmosphere. CN 2 905 302 Y discloses a gas shielding device for laser welding of titanium alloys, comprising a main protective gas nozzle for protection of the welding pool and a tail cover for protection of the postwelding high-temperature zone of the welding seam, wherein the main protective gas nozzle is a double-decked nozzle structure; the tail cover is in fixed connection with escape end of the main protective gas nozzle, including a main tail cover and a tail cover connecting component that is connected with the main protective gas nozzle. A side nozzle according to the preamble of independent claim 1 is disclosed in US 2016 354 866 A1.

### Citation List

### Patent Literature

Patent Literature 1: Japanese Patent Application Laid-Open Publication No. 2015-58448

### Summary

In a case where the laser welding machine welds both the weld position on the ridge portion and the weld position on the valley portion, an operator needs to attach the side nozzle to the welding head at the time of welding the weld position on the ridge portion and the narrow nozzle to the welding head at the time of welding the weld position on the valley portion. When the side nozzle is newly attached to the welding head by replacing the nozzle, the positioning of the gas blow nozzle relative to the weld position is required. The background art has room for improvement in that the replacement of the nozzle attached to the welding head is complicated, and in addition, takes time for positioning and the like.

It is desired to develop a side nozzle, a laser welding machine, and a laser welding method capable of welding both a weld position on a ridge portion and a weld position on a valley portion using the side nozzle as a nozzle attached to a welding head.

According to a first aspect of one or more embodiments, there is provided a side nozzle including: a head attachment attached to a welding head of a laser welding machine and including an opening through which a laser beam emitted from the welding head for irradiation to a weld position passes; and a gas blow nozzle attached to a side of the head attachment and configured to blow shielding gas to the weld position. The gas blow nozzle includes a main nozzle that is disposed closer to the head attachment and is supplied with the shielding gas by a first gas pipe, and a sub-nozzle that is disposed so as to be adjacent to the main nozzle and farther away from the head attachment than the main nozzle and is supplied with the shielding gas by a second gas pipe. The sub-nozzle is removable from the main nozzle.

According to a second aspect of one or more embodiments, there is provided a laser welding machine including: a laser oscillator; a welding head to which a laser beam emitted from the laser oscillator is supplied; and a side nozzle attached to the welding head. The side nozzle includes a head attachment attached to the welding head and including an opening through which the laser beam emitted from the welding head for irradiation to a weld position passes, and a gas blow nozzle attached to a side of the head attachment and configured to blow shielding gas to the weld position. The gas blow nozzle includes a main nozzle that is disposed closer to the head attachment and is supplied with the shielding gas by a first gas pipe, and a sub-nozzle that is disposed so as to be adjacent to the main nozzle and farther away from the head attachment than the main nozzle and is supplied with the shielding gas by a second gas pipe. The sub-nozzle is removable from the main nozzle.

According to a third aspect of one or more embodiments, there is provided a laser welding method including: supplying a laser beam emitted from a laser oscillator to a welding head; irradiating a weld position with the laser beam supplied to the welding head via a head attachment that is provided in a side nozzle, is attached to the welding head, and includes an opening through which the laser beam passes; blowing, at a time of welding a weld position on a ridge portion on an outside of a product, shielding gas from a main nozzle and a sub-nozzle to the weld position with a gas blow nozzle that is attached to a side of the head attachment in a state where the main nozzle and the sub-nozzle are integrated, the main nozzle being disposed closer to the head attachment and being supplied with the shielding gas by a first gas pipe, the sub-nozzle being disposed so as to be adjacent to the main nozzle and farther away from the head attachment than the main nozzle and being supplied with the shielding gas by a second gas pipe; and blowing, at a time of welding a weld position on a valley portion on an inside of the product, the shielding gas from the main nozzle to the weld position with the gas blow nozzle in a state where the sub-nozzle is separated from the main nozzle and only the main nozzle is provided.

According to the side nozzle, laser welding machine, and laser welding method of one or more embodiments, both the weld position on the ridge portion and the weld position on the valley portion can be welded using the side nozzle as a nozzle attached to the welding head.

### Brief Description of Drawings

[Figure 1] Figure 1 is a side view of a laser welding machine according to one or more embodiments.
[Figure 2] Figure 2 is a perspective view of a side nozzle according to one or more embodiments including a gas blow nozzle with a main nozzle and a sub-nozzle integrated.
[Figure 3] Figure 3 is a perspective view of the side nozzle according to one or more embodiments including a gas blow nozzle with the sub-nozzle separated from the main nozzle.
[Figure 4] Figure 4 is a plan view of the sub-nozzle as viewed from the rear surface.
[Figure 5] Figure 5 is a plan view showing the detailed structure of the gas blow nozzle.
[Figure 6] Figure 6 is a plan view showing a gas blow nozzle as a comparative example.
[Figure 7A] Figure 7A is a drawing substitute photograph obtained by analyzing, with a schlieren device and a high-speed camera, a flow of shielding gas when the shielding gas is being blown from the gas blow nozzle with the main nozzle and the sub-nozzle shown in Figure 2 integrated.
[Figure 7B] Figure 7B is a drawing substitute photograph obtained by analyzing, with the schlieren device and the high-speed camera, a flow of shielding gas when the shielding gas is being blown from the gas blow nozzle shown in Fig. 6.
[Figure 8A] Figure 8A is a drawing substitute photograph showing the processing quality when a weld position on a ridge portion is welded using the gas blow nozzle shown in Figure 2.
[Figure 8B] Figure 8B is a drawing substitute photograph showing the processing quality when the weld position on the ridge portion is welded using the gas blow nozzle shown in Figure 6.
[Figure 9A] Figure 9A is a drawing substitute photograph obtained by analyzing, with the schlieren device and the high-speed camera, the flow of the shielding gas when a rectifying member made of a porous metal material is mounted on the gas blow nozzle shown in Figure 2.
[Figure 9B] Figure 9B is a drawing substitute photograph obtained by analyzing, with the schlieren device and the high-speed camera, the flow of the shielding gas when a rectifying member in which mesh members are laminated is mounted on the gas blow nozzle shown in Figure 2**.**
[Figure 10A] Figure 10A is a drawing substitute photograph showing the processing quality when the gas blow nozzle mounted with the rectifying member made of the porous metal material is used to perform rounding on a corner between sheet metals.
[Figure 10B] Figure 10B is an enlarged drawing substitute photograph of a portion circled by a dash-dotted line in Figure 10A.
[Figure 10C] Figure 10C is a drawing substitute photograph showing the processing quality when the gas blow nozzle mounted with the rectifying member in which the mesh members are laminated is used to perform rounding on a corner between sheet metals.
[Figure 10D] Figure 10D is an enlarged drawing substitute photograph of a portion circled by a dash-dotted line in Figure 10C.

### Description of Embodiment

A side nozzle, a laser welding machine, and a laser welding method according to one or more embodiments will be described below with reference to the accompanying drawings.

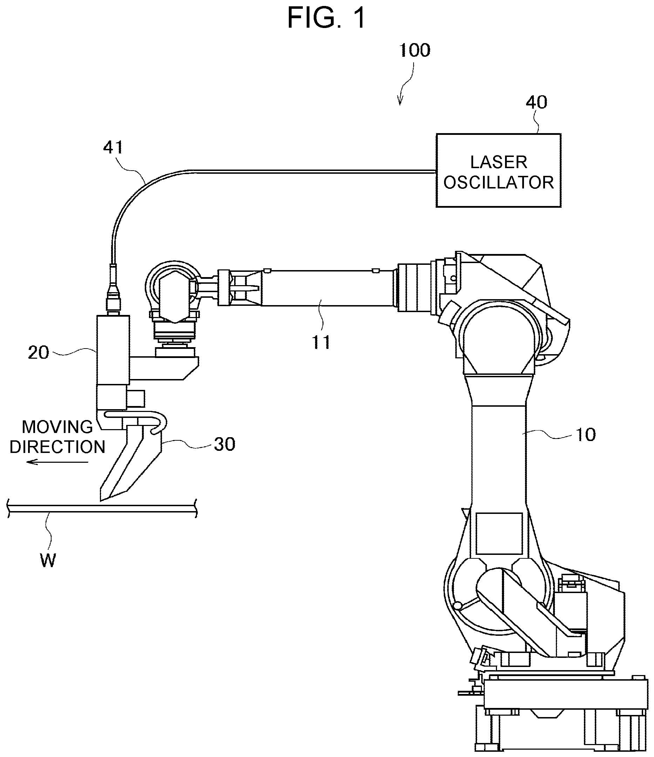

In Figure 1, a robot-type laser welding machine 100 includes an articulated robot 10, a welding head 20, a side nozzle 30 attached to the welding head 20, and a laser oscillator 40. The welding head 20 is attached to the tip end of an arm 11 of the articulated robot 10. The laser oscillator 40 is, for example, a fiber laser oscillator. A laser beam emitted by the oscillation of the laser oscillator 40 is supplied to the welding head 20 via an optical fiber 41. The side nozzle 30 irradiates a weld position on a sheet metal W to be welded with the laser beam. The side nozzle 30 blows shielding gas made of nitrogen gas or argon gas from a gas blow nozzle toward the weld position.

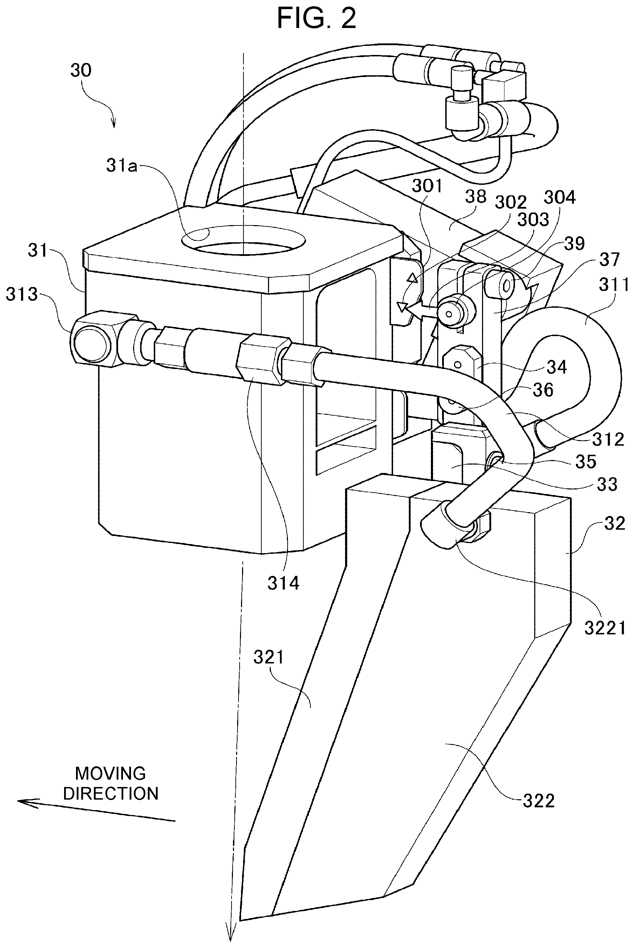

The detailed structure of the side nozzle 30 will be described with reference to Figures 2 to 5. As shown in Figure 2, the side nozzle 30 includes a head attachment 31 attached to the welding head 20. The head attachment 31 includes a circular opening 31a at the upper end and a circular opening (not shown) at the lower end. The laser beam emitted from the welding head 20, indicated by a dash-dotted line, passes through the opening 31a at the upper end and the opening at the lower end for irradiation to the weld position.

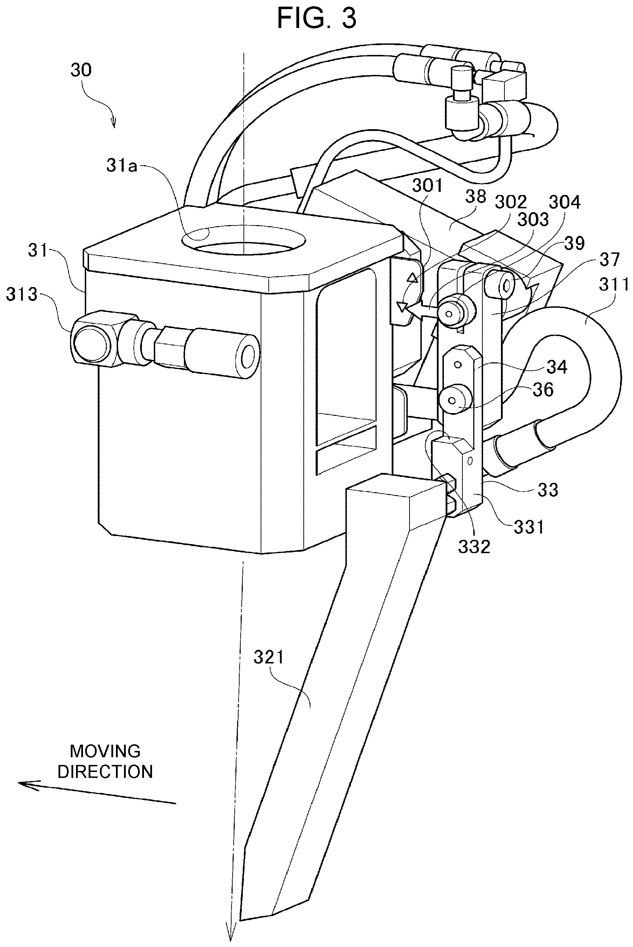

A gas blow nozzle 32 for blowing the shielding gas is attached to the side of the head attachment 31. The gas blow nozzle 32 includes a main nozzle 321 and a sub-nozzle 322. The main nozzle 321 is disposed closer to the head attachment 31. The sub-nozzle 322 is disposed so as to be adjacent to the main nozzle 321 and farther away from the head attachment 31 than the main nozzle 321. The sub-nozzle 322 is removable from the main nozzle 321. That is, the main nozzle 321 and the sub-nozzle 322 are configured to be separable from each other. Figure 3 shows a state where the sub-nozzle 322 has been removed from the main nozzle 321.

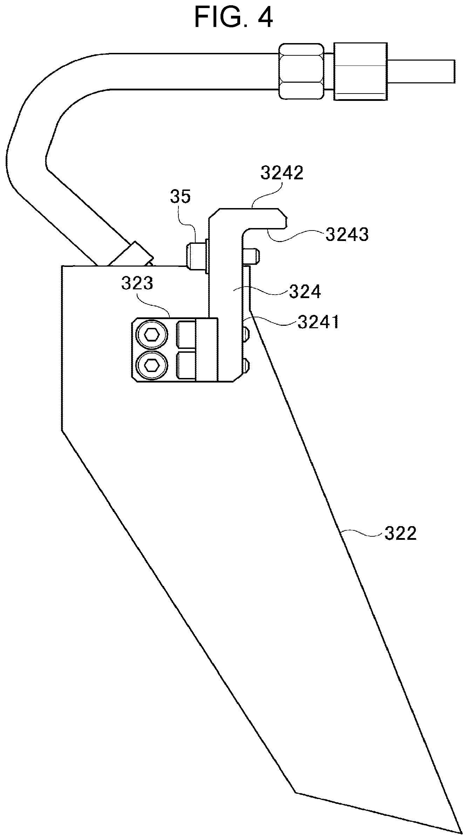

As shown in Figure 2 or 3, a first support 34 is attached to the main nozzle 321 via a sub-nozzle fixing member 33. Figure 4 shows a state where the sub-nozzle 322 is viewed from the rear surface. An L-shaped fixture 323 is screwed to a position above the sub-nozzle 322, and an L-shaped fixture 324 projecting upward is screwed to the fixture 323. The sub-nozzle 322 is fixed to the main nozzle 321 by bringing a side surface 3241 of the fixture 324 and a bottom surface 3243 of a hook-shaped tip end 3242 into contact with a side surface 331 and a top surface 332 of the sub-nozzle fixing member 33, respectively, and tightening a sub-nozzle attachment and removal bolt 35.

As can be understood from Figures 3 and 4, the position of the sub-nozzle 322 in the direction toward or away from the main nozzle 321 is determined by the contact between the side surfaces 3241, 331. The position of the sub-nozzle 322 in the direction toward or away from the first support 34 is determined by the contact of the end face of the fixture 324 opposite to the first support 34 with the first support 34. Therefore, the main nozzle 321 and the sub-nozzle 322 are always connected in a constant state.

The first support 34 is fixed to a second support 37 by a vertical adjustment bolt 36. The vertical position of the first support 34 relative to the second support 37 is adjustable. The vertical position of the first support 34 relative to the second support 37 is adjusted, and the vertical adjustment bolt 36 is tightened to fix the vertical position of the first support 34 relative to the second support 37.

A third support 38 is fixed to the head attachment 31. The rotational position of the second support 37 relative to the third support 38 is adjusted, and the rotation adjusting bolt 39 is tightened to fix the rotational position of the second support 37 relative to the third support 38.

The rotational position of the gas blow nozzle 32 is adjusted in this manner, so that the tip end (lower end) of the gas blow nozzle 32 can be moved toward or away from the weld position that is irradiated with the laser beam. The position of the tip end of the gas blow nozzle 32 is adjusted to be an appropriate position that is not too far from the weld position while not interfere with the laser beam with which the weld position is irradiated.

When the laser welding machine 100 welds the weld position on the valley portion, the gas blow nozzle 32 may interfere with a product. In this case, the interference of the gas blow nozzle 32 (main nozzle 321) with the product can be avoided by fixing the first support 34 at the upward position relative to the second support 37. An arrow-shaped indicator 303 is fixed to the second support 37 by a bolt 304. The head attachment 31 is provided with marks 301, 302. The rotational position of the indicator 303 can be adjusted by loosening the bolt 304.

When the gas blow nozzle 32 and the first support 34 have been positioned downward, an operator adjusts the rotational position of the indicator 303 so that the indicator 303 points to the lower mark 302, as shown in Figures 2 and 3. When the gas blow nozzle 32 and the first support 34 have been positioned upward, the operator adjusts the rotational position of the indicator 303 so that the indicator 303 points to the upper mark 301. This makes it easy to determine whether the gas blow nozzle 32 is located upward or downward.

The shielding gas is supplied to the main nozzle 321 through a gas pipe 311 (first gas pipe) for the main nozzle 321. The shielding gas is supplied to the sub-nozzle 322 through a gas pipe 312 (second gas pipe) for the sub-nozzle 322. The shielding gas is supplied to a gas supply port (not shown) of the main nozzle 321 from a supply device for the shielding gas to be supplied to the main nozzle 321. The main nozzle 321 blows the shielding gas from the tip end (lower end). The shielding gas is supplied to the gas supply port 313 of the sub-nozzle 322 from a supply device for the shielding gas to be supplied to the sub-nozzle 322. The sub-nozzle 322 blows the shielding gas from the tip end (lower end).

As shown in Figure 2, a one-touch joint 314 is provided between the gas supply port 313 and a gas pipe connection 3221. In the case of removing the sub-nozzle 322 from the main nozzle 321, the one-touch joint 314 is removed to disconnect the gas pipe 312 from the gas supply port 313.

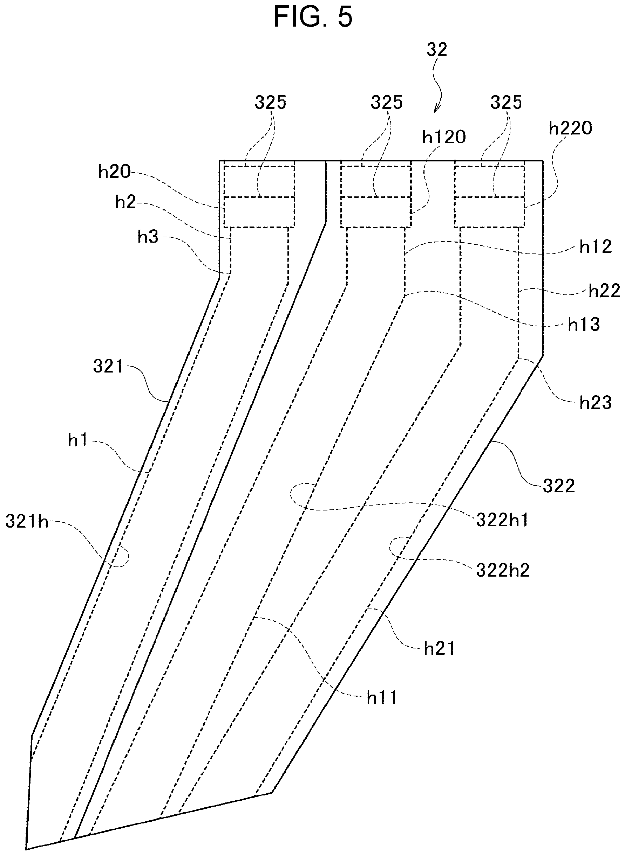

The detailed structure of the gas blow nozzle 32 will be described with reference to Figure 5. The main nozzle 321 is formed by forming a main conduit 321h, made of a through hole with a circular cross section, by a drill in a metal columnar body cut in a shape shown in the drawing. The main nozzle 321 is made of copper that is less likely to be melted by the laser beam reflected at the weld position. The inner diameter of the main conduit 321h is 12 mm, for example.

The sub-nozzle 322 is formed by forming a sub-conduit 322h1 (first sub-conduit) and a sub-conduit 322h2 (second sub-conduit), made of two through holes with a circular cross section, by a drill in a metal plate-shaped body cut in a shape shown in the drawing. The sub-nozzle 322 is made of aluminum or an aluminum alloy. The side nozzle 30 can be reduced in weight as the sub-nozzle 322 is made of aluminum or an aluminum alloy. The reduction in the weight of the side nozzle 30 can reduce the load of the articulated robot 10 at the time of moving the welding head 20 and the side nozzle 30.

The sub-nozzle 322 is away from the weld position, and hence the sub-nozzle 322 does not melt. The inner diameters of the sub-conduits 322h1, 322h2 are also 12 mm, for example.

The main conduit 321h includes an inclined straight portion h1 below a bend h3 and a straight portion h2 above the bend h3. The bend h3 is a boundary between the inclined straight portion h1 and the straight portion h2. The straight portion h2 is substantially parallel to the traveling direction of the laser beam, and the inclined straight portion h1 is inclined from the bend h3 to approach the weld position.

The sub-conduits 322h1, 322h2 include inclined straight portions h11, h21 below the bends h13, h23, and straight portions h12, h22 above the bends h13, h23, respectively. The bends h13, h23 are boundaries between the inclined straight portions h11, h21 and the straight portions h12, h22. The straight portions h12, h22 are substantially parallel to the traveling direction of the laser beam, and the inclined straight portions h11, h21 are inclined from the bends h13, h23, respectively, to approach the weld position.

The bends h3, h13, h23 of the main conduit 321h and the sub-conduits 322h1, 322h2 are formed above the center in the height direction of the gas blow nozzle 32. When the upper end of the gas blow nozzle 32 at which the shielding gas is injected is the first end, and the lower end from which the shielding gas is blown is the second end, the bends h3, h13, h23 are formed close to the first end relative to the center between the first end and the second end. The shielding gas supplied to the straight portions h2, h12, h22 is bent at the bends h3, h13, h23 in the traveling directions, and the shielding gas proceeds to the inclined straight portions h1, h11, h21.

The inclined straight portions h1, h11, h21 are formed so that the distance between each other becomes narrower from the bends h3, h13, h23 toward the tip end of the gas blow nozzle 32. Therefore, the shielding gas supplied from each of the straight portions h2, h12, h22 at the upper end of the gas blow nozzle 32 is blown toward the weld position in a converged state. The tip ends of the inclined straight portions h1, h11, h21 are the outlets of the shielding gas.

Rectifying members 325 for rectifying the shielding gas are mounted on the upper ends of the straight portions h2, h12, h22. The inner diameters of the upper ends of the straight portions h2, h12, h22 have been enlarged to 14 mm, and the portions having the enlarged inner diameters are housing portions h20, h120, h220 for housing the rectifying members 325. The rectifying member 325 is preferably made of a porous metal material. The porous metal material is made of nickel as an example. The rectifying members 325 have a cylindrical shape with a diameter of 14 mm (minus tolerance) and a thickness of about 10 mm, and two rectifying member 325 are mounted in each of the housing portions h20, h120, h220 of the straight portions h2, h12, h22.

The laser beam reflected at the weld position may enter the inclined straight portions h1, h11, or h21 from the tip end of the gas blow nozzle 32. With the gas blow nozzle 32 including the bends h3, h13, h23, it is possible to reduce the possibility that the laser beam reaches the rectifying member 325 and damages the rectifying member 325.

When the side nozzle 30 is attached to the welding head 20, and the laser welding machine 100 welds a weld position on a ridge portion on the outside of a box-shaped product and a weld position on a valley portion on the inside of the product, for example, the operator selectively uses the gas blow nozzle 32 as follows.

As shown in Figure 2, at the time of welding the weld position on the ridge portion on the outside of the product, the operator brings the gas blow nozzle 32 into a state where the main nozzle 321 and the sub-nozzle 322 are integrated. The weld position is irradiated with the laser beam supplied from the welding head 20 (not shown in Figure 2) via the welding head 20. At this time, the shielding gas supplied through each of the main conduit 321h in the main nozzle 321 and the two sub-conduits 322h1, 322h2 in the sub-nozzle 322 is blown to the weld position. In the laser welding machine 100, the welding head 20 and the side nozzle 30 are moved in a moving direction indicated by an arrow, and the main nozzle 321 and the sub-nozzle 322 blow the shielding gas toward the weld position from the rear in the moving direction.

The gas blow nozzle 32 with the main nozzle 321 and the sub-nozzle 322 integrated blows the shielding gas to the weld position, whereby the weld position is shielded well. Moreover, with the gas blow nozzle 32 being configured as shown in Figure 5, the weld position is shielded better when the side nozzle 30 including the gas blow nozzle 32 is used than when a conventional side nozzle is used. A comparison of the shielding properties between the conventional side nozzle and the side nozzle 30 will be described later.

On the other hand, at the time of welding the weld position on the valley portion on the inside of the product, as shown in Figure 3, the operator separates the sub-nozzle 322 from the main nozzle 321 to bring the gas blow nozzle 32 into the state where it includes only the main nozzle 321. At this time, as described above, when the main nozzle 321 interferes with the product, the first support 34 is fixed at the upward position relative to the second support 37 to prevent the main nozzle 321 from interfering with the product. The shielding gas supplied through the main conduit 321h in the main nozzle 321 is blown to the weld position.

The laser welding machine 100 moves the welding head 20 and the side nozzle 30 (not shown in Figure 3) in a moving direction indicated by an arrow, and the main nozzle 321 blows the shielding gas toward the weld position from the rear in the moving direction.

The use of only the main nozzle 321 as the side nozzle 30 so as to weld the weld position on the valley portion on the inside of the product can greatly improve the accessibility to the weld position. The use of only the main nozzle 321 as the side nozzle 30 can achieve similar accessibility to the weld position as in the case of using a narrow nozzle.

The nozzle to be attached to the welding head 20 is maintained in the side nozzle 30, whether the welding is performed on the weld position on the ridge portion on the outside of the product or the weld position on the valley portion on the inside of the product. This eliminates the need to replace the side nozzle 30 with a narrow nozzle, making the complicated work of replacing the nozzle mounted on the welding head 20 unnecessary. The positional relationship between the weld position and the main nozzle 321 remains unchanged even when the sub-nozzle 322 is attached to the main nozzle 321 or the sub-nozzle 322 is separated from the main nozzle 321. This eliminates the need to adjust the angle of the gas blow nozzle 32 (main nozzle 321) and readjust the positional relationship between the weld position and the main nozzle 321.

It is only necessary to adjust the vertical position of the gas blow nozzle 32 (main nozzle 321) at most in the state where the main nozzle 321 and the sub-nozzle 322 are integrated and in the state where the sub-nozzle 322 is separated from the main nozzle 321.

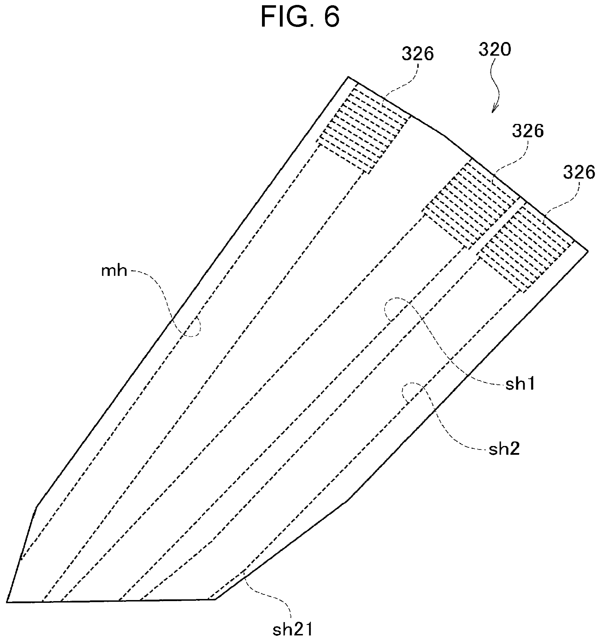

Next, the shielding property of the conventional side nozzle is compared with that of the side nozzle 30. Figure 6 shows a gas blow nozzle 320 as a comparative example provided in the conventional side nozzle. The gas blow nozzle 320 includes a main conduit mh and two sub-conduits sh1, sh2. The main conduit mh and the sub-conduit sh1 are formed linearly. The sub-conduit sh2 includes a bend sh21 at a position near the lower end. The sub-conduit sh2 is formed linearly from the upper end to a bend sh21. The inner diameters of the main conduit mh and the two sub-conduits sh1, sh2 are 12 mm. The gas blow nozzle 320 is made of copper.

The upper ends of the main conduit mh and the two sub-conduits sh1, sh2 are enlarged in inner diameter, and a rectifying member 326 for rectifying the shielding gas is mounted in a housing portion of the enlarged inner diameter portion. The rectifying member 326 is formed by laminating, for example, ten circular mesh members with a spacer between two mesh members. However, in the comparison of the shielding properties between the conventional side nozzle and the side nozzle 30, the rectifying member 325 was used in common.

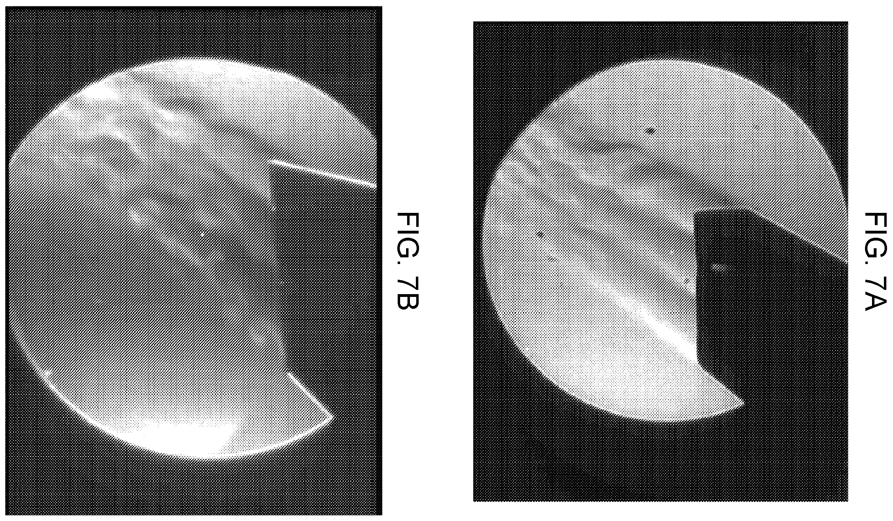

Figure 7A is a photograph obtained by analyzing, with a schlieren device and a high-speed camera, the flow of the shielding gas when the shielding gas is blown from the gas blow nozzle 32 with the main nozzle 321 and the sub-nozzle 322 integrated. The flow rate of the main nozzle 321 (main conduit 321h) is set to 10 liters/minute, and the flow rate of the sub-nozzle 322 (the total of the sub-conduits 322h1, 322h2) is set to 20 liters/minute. Figure 7B is a photograph obtained by analyzing, with the schlieren device and the high-speed camera, the flow of the shielding gas when the shielding gas is blown from the gas blow nozzle 320 shown in Figure 6. The flow rate of the main conduit mh is 10 liters/minute, and the total flow rate of the sub-conduits sh1, sh2 is 20 liters/minute.

A comparison between Figures 7A and 7B shows that a laminar flow in Figure 7A in which the gas blow nozzle 32 is used is less turbulent than a laminar flow in Figure 7B in which the gas blow nozzle 320 is used. The reason for the large amount of turbulence in Figure 7B is thought to be that the direction in which the shielding gas flows changes due to the bend sh21 having been formed at a position near the lower end of the sub-conduit sh2. As described above, the bends h3, h13, h23 of the main conduit 321h and the sub-conduits 322h1, 322h2 are located above the center in the height direction of the gas blow nozzle 32. It is preferable that each of the main conduit 321h and the sub-conduits 322h1, 322h2 is linear without a bend at least from the center to the lower end in the height direction of the gas blow nozzle 32.

Note that the smaller the inner diameter of the conduit, the faster the flow velocity of the shielding gas becomes, which causes a turbulent flow. In the gas blow nozzle 32, it is considered that the larger the inner diameter is in an appropriate range, the more the gas blow nozzle 32 has an auxiliary effect for reducing the turbulent flow.

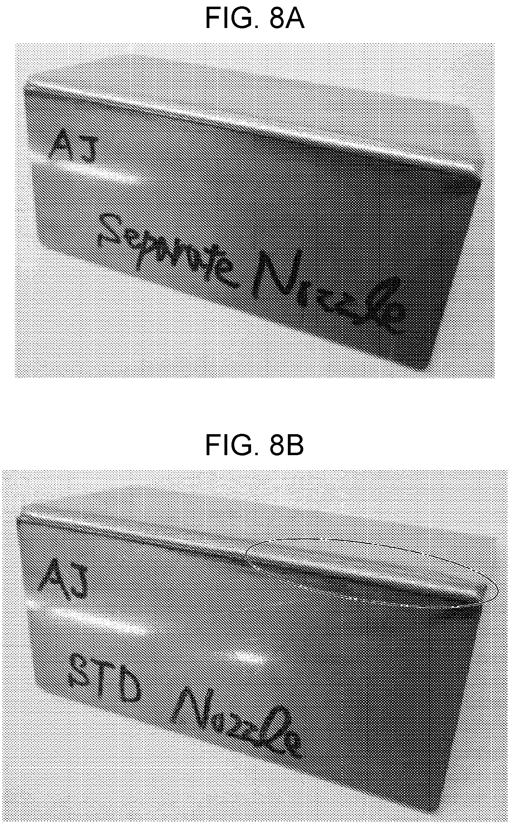

The processing quality in the case of using the gas blow nozzle 32 is compared with that in the case of using the gas blow nozzle 320 with reference to Figures 8A and 8B. Figures 8A and 8B show an example in which two sheet metals of stainless steel (SUS304) having a thickness of 1.5 mm are welded by half-drawn angle joining. The half-drawn angle joining is welding with the end of the surface of one sheet metal positioned at the center of the thickness of the other sheet metal.

Argon gas is used as the shielding gas, the flow rate of the main conduit 321h or mh is set to 30 liters/minute, and the flow rate of the sub-conduits 322h1, 322h2 or sh1, sh2 is set to 40 liters/minute.

As shown in Figure 8A, when the gas blow nozzle 32 is used, the processing quality is good at the corner between the two sheet metal plates, which is the weld position, from the right side end as the starting end of the welding to the left side end as the terminal end of the welding. On the other hand, as shown in Figure 8B, when the gas blow nozzle 320 is used, bead burning has occurred and the processing quality is not good in a range surrounded by a dash-dotted line on the start end side of the welding at the corner between the two sheet metal plates. In Figures 8A and 8B, the welding is performed without using a gas retaining jig to compare the capabilities for shielding the weld position.

Further, the shielding property of the rectifying member 325 made of the porous metal material is compared with that of the rectifying member 326 in which ten mesh members are laminated. As described above, the rectifying member 326 is used in the gas blow nozzle 320 provided in the conventional side nozzle. For comparing the shielding properties between the rectifying member 325 and the rectifying member 326, the side nozzle 30 including the gas blow nozzle 32 is commonly used, and the rectifying member 325 and the rectifying member 326 are selectively mounted in the housing portions h20, h120, h220 to analyze the flow of the shielding gas.

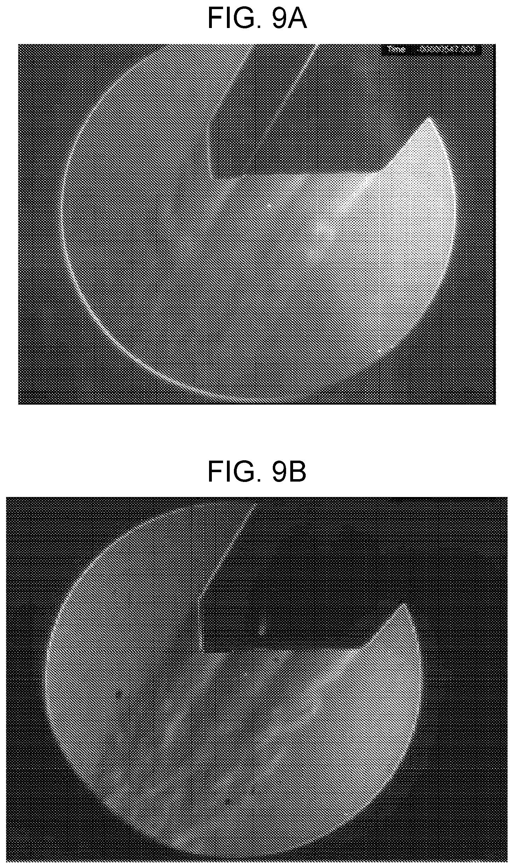

Figure 9A is a photograph obtained by analyzing, with the schlieren device and the high-speed camera, the flow of the shielding gas when the shielding gas is blown from the gas blow nozzle 32, using the rectifying member 325 made of the porous metal material. Figure 9B is a photograph obtained by analyzing, with a schlieren device and a high-speed camera, the flow of the shielding gas when the shielding gas is blown from the gas blow nozzle 32, using the rectifying member 326 in which the ten mesh members are laminated. In both cases, the flow rate of the main nozzle 321 (main conduit 321h) is set to 10 liters/minute, and the flow rate of the sub-nozzle 322 (the total of the sub-conduits 322h1, 322h2) is set to 20 liters/minute.

A comparison between Figures 9A and 9B shows that a laminar flow in Figure 9A in which the rectifying member 325 made of the porous metal material is used is less turbulent than a laminar flow in Figure 9B in which the rectifying member 326 with the laminated ten mesh members is used. The conditions except for the rectifying member are the same, and it can thus be seen that the rectifying member 325 made of the porous metal material has an effect of bringing the flow of the shielding gas close to a laminar flow.

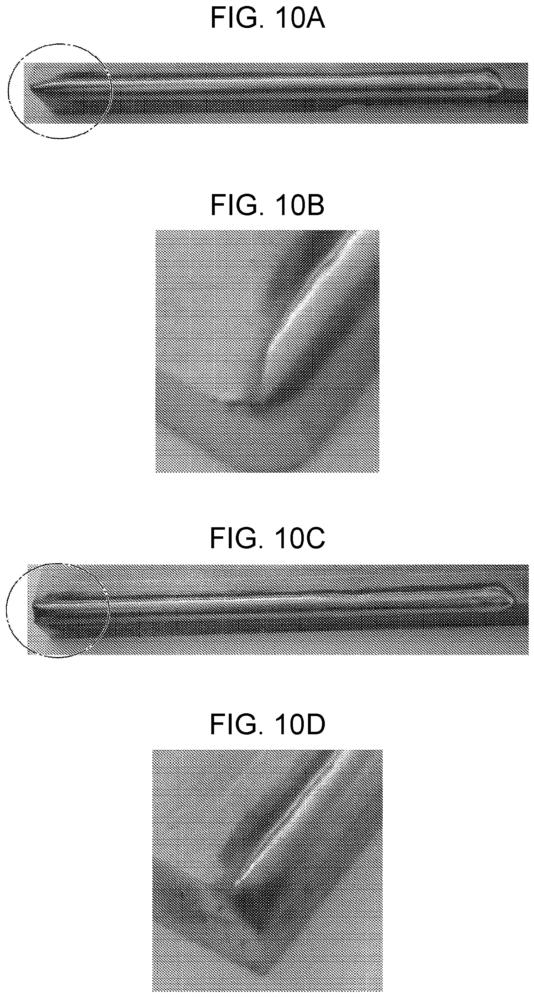

The processing qualities are compared between the case of using the rectifying member 325 and the case of using the rectifying member 326 with reference to Figures 10A to 10D. Figures 10A to 10D show examples of rounding on sheet metals. The rounding is a process of rounding the corner. Figures 10A and 10B show a case where the rectifying member 325 is used, and Figures 10C and 10D show a case where the rectifying member 326 is used.

Argon gas is used as the shielding gas, the flow rate of the main conduit 321h is set to 30 liters/minute, and the flow rate of the sub-conduits 322h1, 322h2 is set to 40 liters/minute.

Figures 10B and 10D are enlarged photographs of ends, which are the start end sides of the welding, circled by dash-dotted lines shown in Figures 10A and 10C, respectively. As is apparent from a comparison between Figures 10B and 10D, bead burning is less and the processing quality is better in Figures 10A and 10B in which the rectifying member 325 made of the porous metal material is used. The reason why the processing quality is better in Figures 10A and 10B than in Figures 10C and 10D is thought to be that the shielding gas blown from the gas blow nozzle 32 forms a laminar flow with less turbulence when the rectifying member 325 is used.

In the case of using the rectifying member 325, there is also an effect of facilitating the replacement of the rectifying member 325 when the rectifying member 325 is damaged and needs to be replaced. In the case of using the rectifying member 326 in which the circular mesh members are laminated, when the rectifying member 326 is damaged and needs to be replaced, the man-hour of manufacturing the rectifying member 326 by laminating circular mesh members is required, thus making the work to replace the rectifying member 326 complicated.

As described above, the side nozzle 30 according to one or more embodiments includes the gas blow nozzle 32 with the sub-nozzle 322 removable from the main nozzle 321. Therefore, it is possible to weld both the weld position on the ridge portion and the weld position on the valley portion while using one side nozzle 30 as a nozzle to be attached to the welding head 20. There is no need to replace the nozzle attached to the welding head 20 with a narrow nozzle at the time of welding the weld position on the valley portion. At this time, the side nozzle 30 can be reduced in weight as the main nozzle 321 is made of copper and the sub-nozzle 322 is made of aluminum or an aluminum alloy.

The gas blow nozzle 32 is preferably configured as follows. The main nozzle 321 includes the main conduit 321h and two sub-conduits 322h1, 322h2 of the sub-nozzle 322. The main conduit 321h and the sub-conduits 322h1, 322h2 include the straight portions h2, h12, h22 formed closer to the first end at which the shielding gas is injected, and the inclined straight portions h1, h11, h21 formed closer to the second end from which the shielding gas is blown. The bends h3, h13, h23 are formed between the straight portions h2, h12, h22 and the inclined straight portions h1, h11, h21. The bends h3, h13, h23 are formed close to the first end relative to the center between the first end and the second end, and no bend is formed in the inclined straight portions h1, h11, h21.

The gas blow nozzle 32 configured in this manner can make the flow of the shielding gas less turbulent to get close to a laminar flow, and the processing quality can be improved.

Each of the straight portions h2, h12, h22 on the first end side is preferably mounted with the rectifying member 325 that is made of a porous metal material and rectifies the shielding gas. When the rectifying member 325 made of the porous metal material is mounted, the flow of the shielding gas can be made less turbulent to get closer to a laminar flow than when the rectifying member 326 in which the mesh members are laminated is mounted. Thus, processing quality can be further improved.

In the laser welding machine 100 according to one or more embodiments, the side nozzle 30 configured as described above is attached to the welding head 20, so that it is possible to weld both the weld position on the ridge portion and the weld position on the valley portion without replacing the nozzle attached to the welding head 20. In the laser welding machine 100 according to one or more embodiments, the gas blow nozzle 32 has a specific configuration as described above, enabling the welding of the sheet metal W with good processing quality.

In the laser welding method according to one or more embodiments, at the time of welding the weld position on the ridge portion on the outside of the product, the shielding gas is blown to the weld position, with the main nozzle and the sub-nozzle integrated. In the laser welding method according to one or more embodiments, at the time of welding a weld position on the valley portion on the inside of the product, the shielding gas is blown to the weld position, with only the main nozzle provided. Hence it is possible to weld the weld positions on both the ridge portion and the valley portion without replacing the nozzle attached to the welding head 20 with a narrow nozzle.

In Figures 2 and 3, a welding wire supply portion for supplying a welding wire (filler wire) is omitted. The welding wire may be used when the sheet metal W is welded.

## Claims

1. A side nozzle (30) comprising:
a head attachment (31) configured to be attached to a welding head (20) of a laser welding machine (100) and including an opening (31a) through which a laser beam emitted from the welding head (20) for irradiation to a weld position passes; and
a gas blow nozzle (32) attached to a side of the head attachment (31) and configured to blow shielding gas to the weld position, wherein
the gas blow nozzle (32) includes
a main nozzle (321) that is disposed closer to the head attachment (31) and is supplied with the shielding gas by a first gas pipe (311), and
a sub-nozzle (322) that is disposed so as to be adjacent to the main nozzle (321) and farther away from the head attachment (31) than the main nozzle (321) and is supplied with the shielding gas by a second gas pipe (312),
**characterized in that**
the sub-nozzle (322) is removable from the main nozzle (321),
the main nozzle (321) is made of copper, and
the sub-nozzle (322) is made of aluminum or an aluminum alloy.

2. A laser welding machine (100) comprising the side nozzle (30) according to claim 1, the laser welding machine (100) further comprising:
a laser oscillator (40); and
a welding head (20) to which a laser beam emitted from the laser oscillator (40) is supplied,
wherein
the side nozzle (30) is attached to the welding head (20).

3. A laser welding method comprising:
supplying a laser beam emitted from a laser oscillator (40) to a welding head (20);
irradiating a weld position with the laser beam supplied to the welding head (20) via a head attachment (31) that is provided in a side nozzle (30) and attached to the welding head (20) and includes an opening (31a) through which the laser beam passes;
blowing, at a time of welding a weld position on a ridge portion on an outside of a product, shielding gas from a main nozzle (321) and a sub-nozzle (322) to the weld position with a gas blow nozzle (32) that is attached to a side of the head attachment (31) in a state where the main nozzle (321) and the sub-nozzle (322) are integrated, the main nozzle (321) being disposed closer to the head attachment (31) and being supplied with the shielding gas by a first gas pipe (311), the sub-nozzle (322) being disposed so as to be adjacent to the main nozzle (321) and farther away from the head attachment (31) than the main nozzle (321) and being supplied with the shielding gas by a second gas pipe (312); and
blowing, at a time of welding a weld position on a valley portion on an inside of the product, the shielding gas from the main nozzle (321) to the weld position with the gas blow nozzle in a state where the sub-nozzle (322) is separated from the main nozzle (321) and only the main nozzle (321) is provided.

4. The laser welding method according to claim 3, wherein the shielding gas is rectified by a rectifying member (325) made of a porous metal material at each of ends of the main nozzle (321) and the sub-nozzle (322) at which the shielding gas is injected.

## Patentansprüche

1. Eine Seitendüse (30) umfassend:
eine Kopfbefestigung (31), die konfiguriert ist, an einem Schweißkopf (20) einer Laserschweißmaschine (100) angebracht zu werden und eine Öffnung (31a) zu enthalten, durch die ein von dem Schweißkopf (20) zur Bestrahlung einer Schweißposition emittierter Laserstrahl hindurchgeht; und
eine Gasblasdüse (32), die an einer Seite der Kopfbefestigung (31) angebracht und konfiguriert ist Schutzgas zu der Schweißposition zu blasen, wobei die Gasblasdüse (32) umfasst
eine Hauptdüse (321), die näher an der Kopfbefestigung (31) angeordnet ist und durch eine erste Gasleitung (311) mit dem Schutzgas versorgt wird, und
eine Nebendüse (322), die benachbart zu der Hauptdüse (321) und weiter von der Kopfbefestigung (31) entfernt als die Hauptdüse (321) angeordnet ist und über eine zweite Gasleitung (312) mit dem Schutzgas versorgt wird,
**gekennzeichnet dadurch, dass**
die Nebendüse (322) von der Hauptdüse (321) abnehmbar ist,
die Hauptdüse (321) aus Kupfer besteht und
die Nebendüse (322) aus Aluminium oder einer Aluminiumlegierung besteht.

2. Eine Laserschweißmaschine (100) mit der Seitendüse (30) gemäß Anspruch 1, wobei die Laserschweißmaschine (100) ferner umfasst:
einen Laseroszillator (40); und
einen Schweißkopf (20), dem ein von dem Laseroszillator (40) emittierter Laserstrahl zugeführt wird, wobei
die Seitendüse (30) an dem Schweißkopf (20) angebracht ist.

3. Ein Laserschweißverfahren, umfassend:
Zuführen eines von einem Laseroszillator (40) emittierten Laserstrahls zu einem Schweißkopf (20);
Bestrahlung einer Schweißposition mit dem Laserstrahl, der dem Schweißkopf (20) über einen Kopfaufsatz (31) zugeführt wird, der in einer Seitendüse (30) angeordnet und am Schweißkopf (20) befestigt ist und eine Öffnung (31a) aufweist, durch die der Laserstrahl hindurchgeht;
Blasen von Schutzgas von einer Hauptdüse (321) und einer Nebendüse (322) zu der Schweißposition mit einer Gasblasdüse (32), die an einer Seite der Kopfbefestigung (31) in einem Zustand angebracht ist, in dem die Hauptdüse (321) und die Nebendüse (322) integriert sind, zum Zeitpunkt des Schweißens einer Schweißposition an einem Stegabschnitt an einer Außenseite eines Produkts, wobei die Hauptdüse (321) näher an der Kopfbefestigung (31) angeordnet ist und durch eine erste Gasleitung (311) mit dem Schutzgas versorgt wird, wobei die Nebendüse (322) so angeordnet ist, dass sie neben der Hauptdüse (321) und weiter von der Kopfbefestigung (31) entfernt ist als die Hauptdüse (321) und durch eine zweite Gasleitung (312) mit dem Schutzgas versorgt wird; und
zum Zeitpunkt des Schweißens einer Schweißposition an einem Talabschnitt auf einer Innenseite des Produkts das Schutzgas von der Hauptdüse (321) zu der Schweißposition mit der Gasblasdüse in einem Zustand bläst, in dem die Nebendüse (322) von der Hauptdüse (321) getrennt ist und nur die Hauptdüse (321) angeordnet ist.

4. Das Laserschweißverfahren gemäß Anspruch 3, wobei das Schutzgas durch ein Gleichrichtelement (325) aus einem porösen Metallmaterial an jedem der Enden der Hauptdüse (321) und der Nebendüse (322), an denen das Schutzgas eingespritzt wird, gleichgerichtet wird.

## Revendications

1. Buse latérale (30) comprenant :
une fixation de tête (31) conçue pour être fixée à une tête de soudage (20) d'une machine de soudage laser (100) et comportant une ouverture (31a) à travers laquelle passe un faisceau laser émis par la tête de soudage (20) pour irradiation sur une position de soudure ; et
une buse de soufflage de gaz (32) fixée sur un côté de la fixation de tête (31) et conçue pour souffler un gaz de protection sur la position de soudure, dans laquelle la buse de soufflage de gaz (32) comporte
une buse principale (321) qui est disposée plus près de la fixation de tête (31) et est alimentée en gaz de protection par un premier tuyau de gaz (311), et
une sous-buse (322) qui est disposée de manière à être adjacente à la buse principale (321) et est plus éloignée de la fixation de tête (31) que la buse principale (321) et est alimentée en gaz de protection par un second tuyau de gaz (312),
**caractérisée en ce que**
la sous-buse (322) est amovible par rapport à la buse principale (321),
la buse principale (321) est constituée de cuivre, et
la sous-buse (322) est constituée d'aluminium ou d'un alliage d'aluminium.

2. Machine de soudage laser (100) comprenant la buse latérale (30) selon la revendication 1, la machine de soudage laser (100) comprenant en outre :
un oscillateur laser (40) ; et
une tête de soudage (20) à laquelle un faisceau laser émis par l'oscillateur laser (40) est appliqué, dans laquelle
la buse latérale (30) est fixée à la tête de soudage (20).

3. Procédé de soudage laser comprenant :
l'application d'un faisceau laser émis par un oscillateur laser (40) à une tête de soudage (20) ;
l'irradiation d'une position de soudure avec le faisceau laser appliqué à la tête de soudage (20) via une fixation de tête (31) qui est disposée dans une buse latérale (30) et fixée à la tête de soudage (20) et comporte une ouverture (31a) à travers laquelle passe le faisceau laser ;
le soufflage, lors du soudage d'une position de soudure sur une partie de crête sur un extérieur d'un produit, d'un gaz de protection depuis une buse principale (321) et une sous-buse (322) sur la position de soudure avec une buse de soufflage de gaz (32) qui est fixée à un côté de la fixation de tête (31) dans un état où la buse principale (321) et la sous-buse (322) sont intégrées, la buse principale (321) étant positionnée plus près de la fixation de tête (31) et étant alimentée en gaz de protection par un premier tuyau de gaz (311), la sous-buse (322) étant positionnée de manière à être adjacente à la buse principale (321) et plus éloignée de la fixation de tête (31) que la buse principale (321) et étant alimentée en gaz de protection par un second tuyau de gaz (312) ; et
le soufflage, lors du soudage d'une position de soudure sur une partie de vallée sur un intérieur du produit, du gaz de protection depuis la buse principale (321) vers la position de soudure avec la buse de soufflage de gaz dans un état où la sous-buse (322) est séparée de la buse principale (321) et où seule la buse principale (321) est prévue.

4. Procédé de soudage laser selon la revendication 3, dans lequel le gaz de protection est rectifié par un élément de rectification (325) constitué d'un matériau métallique poreux à chacune des extrémités de la buse principale (321) et de la sous-buse (322) au niveau desquelles le gaz de protection est injecté.
